**Europäisches Patentamt**

**European Patent Office**

**Office européen des brevets**

(19)

(11) Veröffentlichungsnummer: **0 233 507**
**A1**

(12) ## EUROPÄISCHE PATENTANMELDUNG

(21) Anmeldenummer: **87100908.0**

(22) Anmeldetag: **23.01.87**

(51) Int. Cl.³: **F 16 M 11/04**

(30) Priorität: **29.01.86 DE 3602549**

(43) Veröffentlichungstag der Anmeldung:
**26.08.87 Patentblatt 87/35**

(84) Benannte Vertragsstaaten:
**AT BE CH DE ES FR GB IT LI LU NL SE**

(71) Anmelder: **Wella Aktiengesellschaft**
**Berliner Allee 65**
**D-6100 Darmstadt(DE)**

(72) Erfinder: **Brähler, Manfred**
**Am Fronhof 20**
**D-6402 Grossenlüder(DE)**

(72) Erfinder: **Noll, Erwin**
**Gartenstrasse 24**
**D-6418 Hünfeld(DE)**

(72) Erfinder: **Rousek, Heinz**
**Wartburgring 4**
**D-6418 Hünfeld(DE)**

(54) **Vorrichtung zum Tragen von horizontal und vertikal verstellbaren Informationsgeräten.**

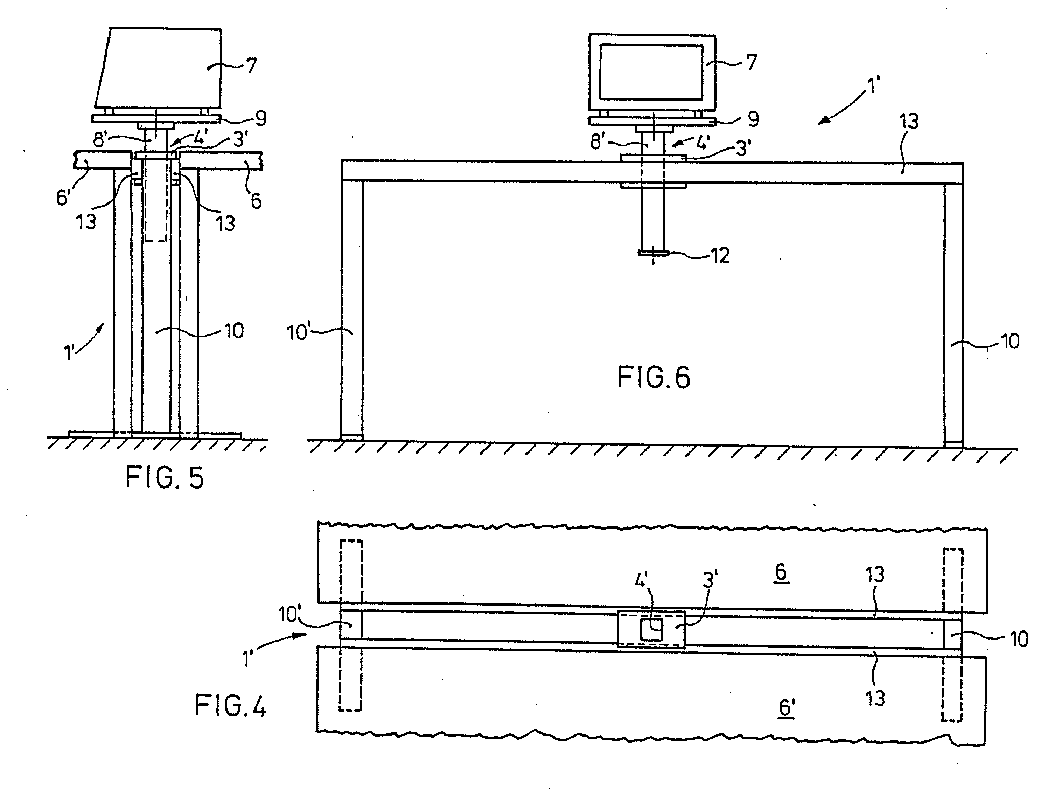

(57) Die Erfindung betrifft eine Vorrichtung 1, 1' zum Tragen von horizontal und vertikal verstellbaren Informationsgeräten 7, wobei die Vorrichtung 1, 1' zwei Standbeine 10, 10' aufweist, die am oberen Ende mit einem horizontal angeordneten Träger 2, 13 verbunden sind für das Tragen und Führen eines ein Informationsgerät 7 über eine Säule 8, 8' tragenden Körpers 3, 3', z. B. in Form eines Schlittens oder Wagens. Die Erfindung ist dadurch ausgezeichnet, daß die Standbeine 10, 10' eine feste Höhe aufweisen und daß der Körper 3, 3' eine Aufnahme 4, 4' für eine vertikal verstellbare Säule 8, 8' aufweist. In einer vorteilhaften Ausgestaltung der Erfindung ist ein Doppelträger 13 vorgesehen, wobei die Aufnahme 4' im Körper 3' mittig angeordnet ist zwecks vertikaler Verstellmöglichkeit einer Säule 8', wodurch eine geringe Bautiefe der Vorrichtung 1' erreicht wird. Die Vorrichtung 1, 1' ist einfach im Aufbau und kostengünstig herstellbar (Fig. 4).

FIG.4

FIG.6

Wella Aktiengesellschaft

Berliner Allee 65

6100 Darmstadt

Vorrichtung zum Tragen von horizontal und vertikal verstellbaren Informationsgeräten

Die Erfindung betrifft eine Vorrichtung zum Tragen von horizontal und vertikal verstellbaren Informationsgeräten, wobei die Vorrichtung zwei Standbeine aufweist, die am oberen
Ende mit einem horizontal angeordneten Träger verbunden sind
für das Tragen und Führen eines ein Informationsgerät über
eine Säule tragenden Körpers, z. B. in Form eines Schlittens
oder Wagens.

Eine solche Vorrichtung ist bekannt durch die DE-A-34 15 497.
Hierbei erfolgt die Höhenverstellung des Informationsgerätes
mittels in der Höhe verstellbare Füße, wobei dafür ein aufwendiger Kurbelantrieb mit entsprechenden Getrieben für jeden verstellbaren Fuß erforderlich ist.

Aufgabe der Erfindung ist es, eine Vorrichtung gemäß dem
Oberbegriff des Anspruchs 1 zu schaffen, die einfach im Aufbau und damit kostengünstig herstellbar ist. Durch eine Weiterbildung der Erfindung soll erreicht werden, daß die zwischen zwei sich gegenüber stehenden Arbeitstischen aufgestellte Vorrichtung ein relativ enges Gegenüberstehen der
Arbeitstische ermöglicht, ohne daß die Bewegungsfreiheit des
Körpers durch die Tischkanten beeinträchtigt werden könnte.

Gelöst wird die Aufgabe dadurch, daß die Standbeine eine
feste Höhe aufweisen und daß der Körper eine Aufnahme für
eine vertikal verstellbare Säule aufweist.

In einer ersten Ausgestaltung der Erfindung ist die Aufnahme

/ 2

seitlich neben dem Träger angeordnet, so daß eine mit der Aufnahme verbundene vertikal verstellbare Säule die Höhenverstellung eines Informationsgerätes ermöglicht.

In einer vorteilhaften Weiterbildung der Erfindung ist vorgesehen, daß die Aufnahme im Körper mittig angeordnet ist und daß der Träger als Doppelträger ausgebildet ist, wodurch die zwischen zwei sich gegenüber stehenden Arbeitstischen aufgestellte Vorrichtung ein relativ enges Gegenüberstehen der Arbeitstische ermöglicht, ohne daß die Bewegungsfreiheit des Körpers durch die Tischkanten beeinträchtigt ist.

In einer Ausgestaltung des Doppelträgers sind die Träger mit einem rechteckförmigen Profil versehen, was eine relativ geringe Bautiefe ermöglicht.

In einer weiteren Ausgestaltung des Doppelträgers weisen die Träger ein rundes Profil auf, was eine allseitig hohe Verwindungsfestigkeit bewirkt.

Bei einer Wagen-Ausführung des Körpers weist der Träger ober- und/oder unterseitig eine Führungsschiene für die Wagenräder auf. Dadurch ist ein leichtes horizontales Gleiten des Körpers ermöglicht sowie eine spielfreie Führung des Wagens.

Dadurch, daß der Träger und die Führungsschiene einstückig ausgebildet sind, ist weiterhin eine kostengünstige Herstellung möglich.

Durch die fest vorgegebene Höhe der Träger,etwa auf Höhe von Arbeitstischen,ist bei nicht nach oben ausgezogener Säule eine Grundhöhe für ein Informationsgerät vorgegeben mit höchster Standfestigkeit für das zu tragende Informationsgerät.

Im Folgenden wird die Erfindung anhand von zum Teil schematisch dargestellten Figuren näher beschrieben.

Es zeigt:

Fig. 1 in einer Draufsicht auf die Vorrichtung die seitlich neben dem Träger angeordnete Aufnahme am horizontal verstellbaren Körper;

Fig. 2 in einer Seitenansicht die ein Informationsgerät tragende Vorrichtung;

Fig. 3 in einer weiteren Seitenansicht die Vorrichtung mit dem horizontal verstellbaren Körper, der mittels der Aufnahme über eine Säule ein Informationsgerät trägt;

Fig. 4 in einer Draufsicht auf die Vorrichtung ein weiteres Ausführungsbeispiel mit einem Doppelträger;

Fig. 5 in einer Seitenansicht die Vorrichtung gemäß Fig. 4;

Fig. 6 in einer weiteren Seitenansicht die Vorrichtung gemäß Fig. 4 und 5;

Fig. 7 einen Querschnitt A-A' (Fig. 8) durch den Körper und den Doppelträger;

Fig. 8 eine Ansicht von unten auf den aufgeschnittenen Körper (B-B' - Fig. 7).

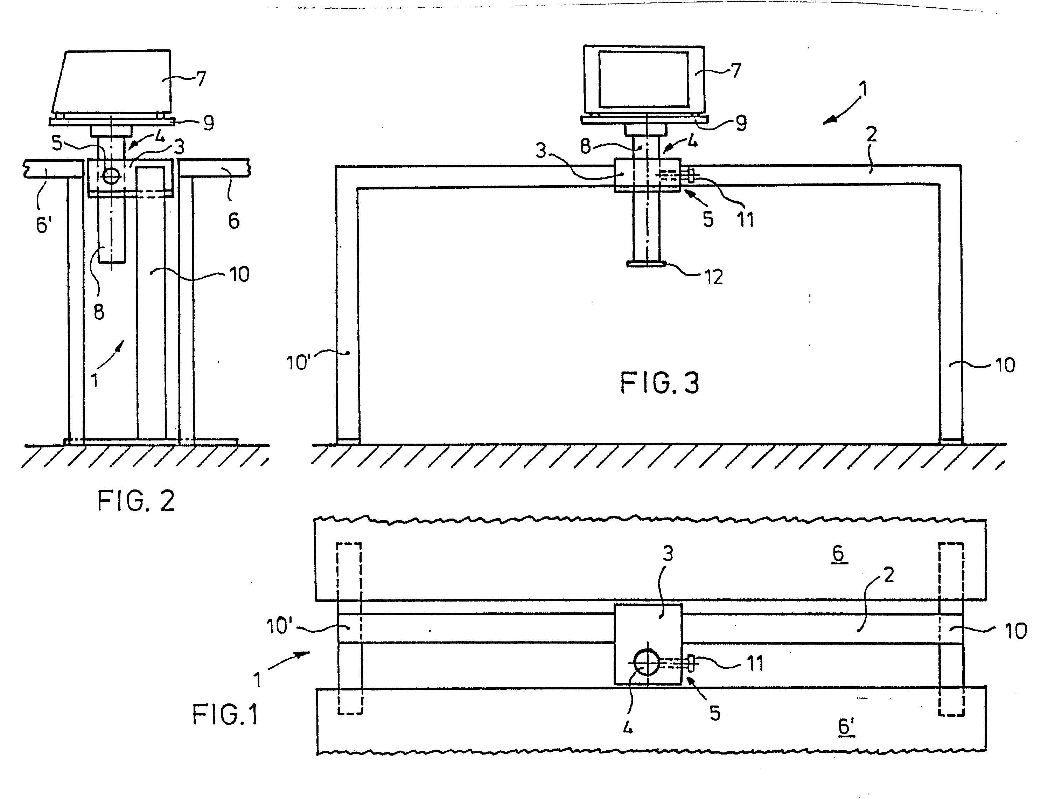

Fig. 1 zeigt in einer Draufsicht die Vorrichtung 1, die einen horizontal angeordneten Träger 2 aufweist und mit einem horizontal verstellbaren Körper 3 versehen ist. Der Körper 3 weist seitlich neben dem Träger 2 eine Aufnahme 4 auf, die mit einer Arretierungseinrichtung 5 versehen ist. Die Vorrichtung 1 ist zwischen zwei sich gegenüber liegenden Arbeitstischen 6, 6' angeordnet, wodurch die Vorrichtung 1 für eine wechselseitige Benutzung zur Verfügung steht.

In der Fig. 2 ist die Vorrichtung 1 mit einem Körper 3 dargestellt, der mittels der Aufnahme 4 mit einer Säule 8 verbunden ist, die über eine drehbare Tragplatte 9 das Informationsgerät 7 trägt. Mittels der Arretierungseinrichtung 5 läßt sich die Höhe der Säule 8 und damit die Höhe des Informationsgerätes 7 einstellen. Die Säule 8 und die Arretierungseinrichtung 5 können natürlich auch so ausgestaltet sein, daß die Säule 8 um Ihre Achse frei drehbar ist, wobei dann die Tragplatte 9 mit der Säule 8 fest verbunden sein kann. Für die Säule 8 und die Aufnahme 4 kann natürlich ein rechteckförmiger Querschnitt vorgesehen sein, wobei dann die Tragplatte 9 mit der Säule 8 drehbar verbunden sein muß. Die Höhe der Vorrichtung 1 ist durch die feste Höhe der Standbeine 10, 10' vorgegeben. Die Höhe des Trägers 2 ist in etwa so bemessen, daß in der tiefsten vertikalen Position der Tragplatte 9 diese knapp über den Arbeitstischen 6, 6' positioniert ist und damit eine Grundhöheneinstellung der Tragplatte 9 vorgegeben ist. Eine weitere vertikale Höhenverstellung kann mittels der höhenverstellbaren Säule 8 mittels der Arretierungseinrichtung 5 individuell eingestellt werden. Durch die seitlich neben dem Träger 2 angeordnete Aufnahme 4 ist eine hohe Tragstabilität des Informationsgerätes 7 gewährleistet.

In der Fig. 3 ist die Vorrichtung 1 zwecks besserer Anschauung ohne Tische 6, 6' dargestellt. Die Arretierungseinrichtung 5 ist in diesem Ausführungsbeispiel mit einer Klemmschraube versehen, die die Säule 8 in der eingestellten Position festhält. Der horizontal auf dem Träger 2 verstellbare Körper 3 kann sowohl als Schlitten oder Wagen ausgeführt sein, wahlweise mit dem Träger 2 feststellbar. Die Säule 8 kann am unteren Ende gegen vollständiges herausziehen mit einer Scheibe 12 versehen werden.

In einem weiteren Ausführungsbeispiel ist in den Fig. 4 bis 6 eine Vorrichtung 1' mit einem Doppelträger 13 dargestellt, wobei der Körper 3' eine mittig angeordnete Aufnahme 4'aufweist. Dieses Ausführungsbeispiel weist den Vorteil auf, daß die Arbeitstische 6, 6' gegen den Doppelträger 13 gestellt werden können und die Bewegungsfreiheit des Körpers 3' nicht eingeschränkt ist. Ein weiterer Vorteil ist darin zu sehen, daß die Lastaufnahme des Körpers 3' mittels der mittig angeordneten Aufnahme 4 mittig zum Doppelträger 13 erfolgt. Ein weiterer Vorteil ist, daß durch diese Anordnung des Doppelträgers 13 die Arbeitstische 6, 6' verhältnismäßig eng zusammengestellt werden können. Der Körper 3' kann wahlweise als Schlitten- oder Wagenausführung ausgestaltet sein.

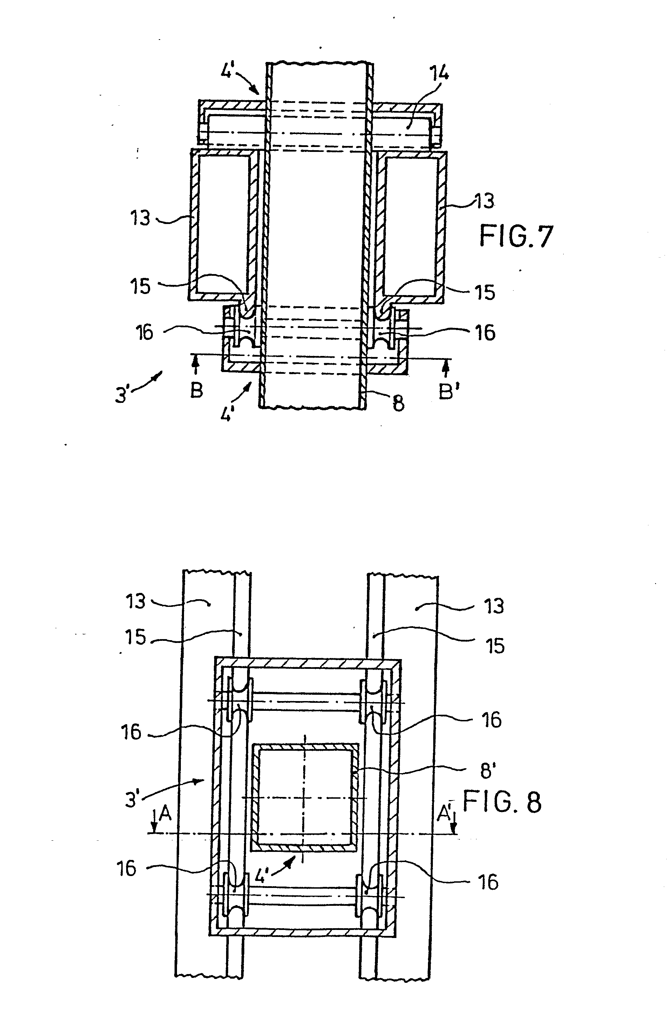

In der Fig. 7 ist in einem Querschnitt axial durch die Säule 8'der Körper 3' dargestellt, jedoch ohne Arretierungseinrichtung 5. Die hier dargestellte Säule 8'weist einen rechteckförmigen Querschnitt auf, wodurch ein axiales Drehen der Säule 8'im Körper 3' nicht möglich ist, sondern die Tragplatte 9 drehbar ausgestaltet werden muß. Die beiden Oberseiten des Doppelträgers 13 dienen als Gegenlager bzw. Rollführung für das Rad 14. An der Unterseite des Doppelträgers 13 ist eine Führungsschiene 15 vorgesehen, die ein seitliches Verschieben des Körpers 3' quer zur Führungsrichtung des Doppelträgers 13 verhindert. Dazu weist ein auf der Führungsschiene 15 aufsitzendes Rad 16 ein zu dem Profil der Führungsschiene 15 komplementäres Profil auf. Anstatt des Rades 14, das langzylindrisch ausgebildet ist, könnte auch eine entsprechende Führungsschiene 15 mit einem dazu korrespondierenden Rad 16 vorgesehen werden, wodurch der Rollwiderstand beim Verschieben des Körpers 3' sich wesentlich verringert.

## Ansprüche

1. Vorrichtung (1, 1') zum Tragen von horizontal und vertikal verstellbaren Informationsgeräten (7), wobei die Vorrichtung (1, 1') zwei höhenverstellbare Standbeine (10, 10') aufweist, die am oberen Ende mit einem horizontal angeordneten Träger (2) verbunden sind für das Tragen und Führen eines ein Informationsgerät (7) über eine Säule (8, 8') tragenden Körpers (3), z. B. in Form eines Schlittens oder Wagens, d a d u r c h g e k e n n - z e i c h n e t , daß die Standbeine (10, 10') eine feste Höhe aufweisen und daß der Körper (3, 3') eine Aufnahme (4, 4') für eine vertikal verstellbare Säule (8, 8') aufweist.

2. Vorrichtung nach Anspruch 1, d a d u r c h g e - k e n n z e i c h n e t , daß die Aufnahme (4) seitlich neben dem Träger (2) angeordnet ist.

3. Vorrichtung nach Anspruch 1, d a d u r c h g e - k e n n z e i c h n e t , daß die Aufnahme (4') mittig angeordnet ist und daß der Träger (2) als Doppelträger (13) ausgebildet ist.

4. Vorrichtung nach Anspruch 3, d a d u r c h g e - k e n n z e i c h n e t , daß die Träger (13) ein rechteckförmiges Profil aufweisen.

5. Vorrichtung nach Anspruch 3, d a d u r c h g e - k e n n z e i c h n e t , daß die Träger (13) ein rundes Profil aufweisen.

6. Vorrichtung nach den Ansprüchen 1 bis 5, d a d u r c h g e k e n n z e i c h n e t , daß mindestens ein Träger (2, 13) ober- und/oder unterseitig eine Führungsschiene (15) aufweist.

/ 2

7. Vorrichtung nach Anspruch 6, d a d u r c h   g e -
k e n n z e i c h n e t , daß der Träger (2, 13) und die
Führungsschiene (15) einstückig ausgebildet sind.

8. Vorrichtung nach den Ansprüchen 1 bis 7, d a d u r c h
g e k e n n z e i c h n e t , daß die Oberseite des Körpers (3, 3') ungefähr die Höhe eines Arbeitstisches (6,
6') aufweist.

FIG. 2

FIG. 3

FIG.1

0233507

FIG.4

FIG.5

FIG.6

0233507

FIG.7

FIG. 8

Europäisches
Patentamt

**EUROPÄISCHER RECHERCHENBERICHT**

Nummer der Anmeldung **0233507**

EP 87 10 0908

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | GB-A-2 081 362 (NIPPON VICTOR K.K.)<br>* Seite 2, Zeilen 30-46; Figur 2 * | 1,2,5 | |
| | ----- | | |

RECHERCHIERTE SACHGEBIETE (Int. Cl 4)

Der vorliegende Recherchenbericht wurde für alle Patentansprüche erstellt.

| Recherchenort | Abschlußdatum der Recherche | Prüfer |
|---|---|---|
| DEN HAAG | 18-05-1987 | BARON C. |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| Y,D | DE-A-3 415 497 (F. LEYMANN) <br><br> * Insgesamt * | 1,2,6-8 | F 16 M 11/04 |
| A | ! | 4 | |
| | --- | | |
| Y | FR-A-2 373 103 (NAESS et al.) <br><br> * Seite 2, Zeilen 20-36; Figuren 3,7,8 * | 1,2,6-8 | |
| A | | 4 | |
| | --- | | |
| Y | DE-A-3 217 431 (TELEFONBAU UND NORMALZEIT GmbH) <br> * Seite 5, Zeilen 26-29; Figur 1 * | 1,2,6-8 | |
| A | US-A-2 562 979 (C.R. YINGLING) <br><br> * Spalte 1, Zeile 54 - Spalte 3, Zeile 57; Figuren 1,6 * | 1,2,5,6,8 | RECHERCHIERTE SACHGEBIETE (Int. Cl.4) <br><br> F 16 M <br> G 06 F <br> A 47 B |
| A | GB-A- 464 856 (QUARZLAMPEN-GESELLSCHAFT MIT BESCHRÄNKTER HAFTUNG) <br> * Seite 2, Zeilen 7-17; Figuren 1-3 * | 3,4,6,7 | |
| | ---     -/- | | |

Der vorliegende Recherchenbericht wurde für alle Patentansprüche erstellt.

| Recherchenort <br> DEN HAAG | Abschlußdatum der Recherche <br> 18-05-1987 | Prüfer <br> BARON C. |
|---|---|---|